# EUROPEAN PATENT APPLICATION

(11) **EP 4 749 275 A1**
(43) Date of publication of application: **27.05.2026**
(21) Application number: 24842921.9
(22) Date of filing: 28.06.2024
(51) Int. Cl.: G01N 27/26, G01N 27/333, G01N 27/416

(54) **ANALYSIS DEVICE AND METHOD FOR DETERMINING PRESENCE OR ABSENCE OF ABNORMALITY**

(30) Priority: 19.07.2023 JP 2023117789
(71) Applicant: HITACHI HIGH-TECH CORPORATION, Tokyo 105-6409 (JP)
(72) Inventor: SAEGUSA, Takashi, Tokyo 105-6409 (JP); KARO, Hikaru, Tokyo 105-6409 (JP); INABE, Toshiyuki, Tokyo 105-6409 (JP)
(74) Representative: MERH-IP Matias Erny Reichl Hoffmann Patentanwälte PartG mbB
(86) International application number: PCT/JP2024/023542
(87) International publication number: WO 2025/018126

(57) **Abstract**

To provide an analyzing apparatus and a method of determining an abnormality capable of detecting abnormalities including defects and deterioration of replaceable components based on a potential difference generated between an ion selective electrode and a reference electrode, in an analyzing apparatus that measures a concentration of electrolytes in a sample, a waveform acquisition unit associates the acquired waveforms with each of driving timings, detects a peak of a waveform that appears in temporal vicinity of the driving timing, and calculates a feature amount. Here, the feature amount includes at least one of the electromotive force at the peak or a time period between a time of the driving timing and a time of occurrence of the peak. Then, the waveform analyzing unit determines an abnormality based on the feature amount (refer to Fig. 4).

## Description

### Technical Field

The present disclosure relates to an analyzing apparatus and a method of determining an abnormality in the analyzing apparatus.

### Background Art

Recently, analyzing apparatuses are equipped with a plurality of ion selective electrodes (ISEs) for measuring a concentration of ions (electrolytes) such as potassium, sodium, and chloride in biological samples, the ISEs corresponding to the ions to be detected.

An electrolyte analyzing unit including the ion selective electrode is used alone or as an element of an automatic biochemical analyzing apparatus and the like such that an automatic analyzing apparatus can perform clinical examinations automatically, quickly, and continuously.

The ion selective electrode is used in combination with a reference electrode, and an activity (concentration) of the target ion is obtained by measuring a potential difference generated between the ion selective electrode and the reference electrode.

In the field of clinical examination, the concentration of electrolytes contained in specimens such as blood, particularly serum and plasma, and urine as biological samples is often quantified.

In the automatic analyzing apparatus, a mainstream method of quantifying the specimen is a dilution method in which a predetermined amount of a diluted solution is added to and mixed with a predetermined amount of the specimen, the mixture is diluted, and the diluted mixture is measured using the ion selective electrode.

The dilution method is excellent in that the method requires a small amount of specimen, has low concentrations of coexisting substances such as proteins and lipids in the measurement solution, is less affected by contamination by coexisting substances, and has high stability of the ion selective electrode.

A container called a diluent tank is used to dilute the specimen, and the diluted specimen (measurement solution) provided in the diluent tank is delivered via a pipe to a flow cell-type ion selective electrode and measured.

An internal standard solution is dispensed into the diluent tank alternately with the specimen, and is measured alternately with the specimen.

The concentration of electrolytes in a living body is maintained within a narrow concentration range, and even a slight change in concentration can have significant clinical and therapeutic implications.

Therefore, ion selective electrodes are required to have extremely high measurement accuracy, and various technologies have been developed to minimize measurement errors.

For example, PTL 1 describes a method of measuring a potential of an ion selective electrode filled with an internal standard solution and determining an abnormality in the electrolyte analyzing unit based on measurement data.

### Citation List

### Patent Literature

PTL 1: JP2016-188872A

### Summary of Invention

### Technical Problem

In the electrolyte analyzing unit, measurement errors occur due to defects during installation and deterioration over time after installation of replaceable components that need to be periodically replaced.

Since such replaceable components are replaced once every few months, defects occur highly frequently, and measurement errors are more likely to occur potentially.

However, in the related art, determination of abnormalities due to defects and deterioration of replaceable components is not considered.

An object of the present disclosure is to provide an analyzing apparatus and a method of determining an abnormality capable of detecting abnormalities including defects and deterioration of replaceable components based on a potential difference generated between an ion selective electrode and a reference electrode.

### Solution to Problem

An example of an analyzing apparatus according to the present disclosure is
an analyzing apparatus that measures a concentration of electrolytes in a sample, the analyzing apparatus including,
a plurality of ion selective electrodes that acquire a potential based on the concentration of electrolytes,
a reference electrode that acquires a potential based on a reference solution,
a flow passage through which the sample or the reference solution is supplied to the ion selective electrodes and the reference electrode,
a plurality of driving units that control the flow passage, aspirate the sample, discharge the sample, aspirate the reference solution, and discharge the reference solution,
a potential measurement unit that measures electromotive force between a potential acquired by the ion selective electrodes and a potential acquired by the reference electrode,
a waveform acquisition unit that acquires a waveform representing a change in the electromotive force,
a waveform analyzing unit that performs analysis using the change in the electromotive force, and
a driving control unit that outputs a control signal to one or a plurality of the driving units in relation to each of a plurality of driving timings related to a component to be replaced, in which
the waveform acquisition unit associates the acquired waveform with each of the driving timings, detects a peak of a waveform that appears in temporal vicinity of the driving timing, and calculates a feature amount,
the feature amount includes at least one of
   - the electromotive force at the peak, and
   - a time period between a time of the driving timing and a time of occurrence of the peak, and
the waveform analyzing unit determines an abnormality based on the feature amount.

An example of a method according to the present disclosure is
a method of determining an abnormality in an analyzing apparatus that measures a concentration of electrolytes in a sample, the analyzing apparatus including,
a plurality of ion selective electrodes that acquire a potential based on the concentration of electrolytes,
a reference electrode that acquires a potential based on a reference solution,
a flow passage through which the sample or the reference solution is supplied to the ion selective electrodes and the reference electrode,
a plurality of driving units that control the flow passage, aspirate the sample, discharge the sample, aspirate the reference solution, and discharge the reference solution,
a potential measurement unit that measures electromotive force between a potential acquired by the ion selective electrodes and a potential acquired by the reference electrode,
a waveform acquisition unit that acquires a waveform representing a change in the electromotive force,
a waveform analyzing unit that performs analysis using the change in the electromotive force, and
a driving control unit that outputs a control signal to one or a plurality of the driving units in relation to each of a plurality of driving timings related to a component to be replaced, in which
the method includes,
a step of associating the acquired waveform with each of the driving timings, detecting a peak of a waveform that appears in temporal vicinity of the driving timing, and calculating a feature amount by the waveform acquisition unit,
the feature amount includes at least one of
   - the electromotive force at the peak, and
   - a time period between a time of the driving timing and a time of occurrence of the peak, and
the method includes a step of determining an abnormality based on the feature amount by the waveform analyzing unit.

### Advantageous Effects of Invention

According to one aspect of the present disclosure, it is possible to reduce man-hour for manually checking defects and deterioration of the replaceable components of the electrolyte analyzing unit.

According to another aspect of the present disclosure, it is possible to appropriately replace the replaceable components and prevent measurement errors from occurring during electrolyte analysis in advance.

### Brief Description of Drawings

[Fig. 1] Fig. 1 is a configuration diagram of an analyzing apparatus according to a first embodiment.
[Fig. 2] Fig. 2 is a flowchart showing a processing procedure of a waveform acquisition unit and a waveform analyzing unit according to the first embodiment.
[Fig. 3] Fig. 3 is a flowchart showing a procedure for acquiring a time history waveform of electromotive force and calculating a feature amount according to the first embodiment.
[Fig. 4] Fig. 4 is a graph illustrating a method of calculating the feature amount of the time history waveform of the electromotive force according to the first embodiment.
[Fig. 5] Fig. 5 is a flowchart showing a procedure for managing an acquisition time of the electromotive force waveform according to the first embodiment.
[Fig. 6] Fig. 6 is a flowchart showing a processing procedure for abnormality determination according to the first embodiment.
[Fig. 7] Fig. 7 is a graph illustrating an abnormality determination method using a change over time in the feature amount of the electromotive force waveform according to the first embodiment.
[Fig. 8] Fig. 8 is a diagram illustrating an example of a display screen output on a display unit according to the first embodiment.

### Description of Embodiments

Next, a mode for carrying out the present disclosure (referred to as an "embodiment") will be described in detail with reference to the drawings as appropriate.

### [First Embodiment]

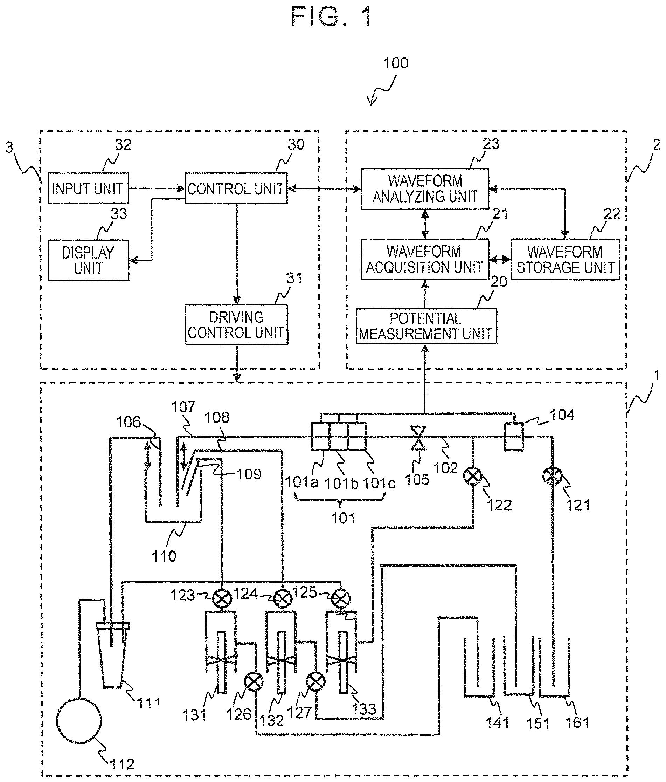

Fig. 1 is a configuration diagram of an analyzing apparatus 100 according to a first embodiment.

The analyzing apparatus 100 includes an electrolyte analyzing unit 1, an electromotive force waveform processing unit 2, and an apparatus control unit 3. The analyzing apparatus 100 is an apparatus that measures a concentration of electrolytes in a sample and executes a method of determining an abnormality in the analyzing apparatus 100.

The electrolyte analyzing unit 1 includes,
- a plurality of ion selective electrodes 101 (for example, three types of a chloride ion electrode 101a, a potassium ion electrode 101b, and a sodium ion electrode 101c) that generate a potential corresponding to an ion concentration in the sample,
- a reference electrode 104 that generates a constant reference potential such that the potential of the ion selective electrode 101 can be measured as a potential difference (electromotive force),
- a sipper tube 102 configures a flow passage between the ion selective electrodes 101 and the reference electrode 104 as an example of a replaceable component to be replaced periodically,
- a pinch valve 105 that opens and closes the flow passage of the sipper tube 102,
- a diluent tank 110 that stores an internal standard solution and a measurement solution in which a specimen and a diluted solution are mixed (hereinafter referred to as a "sample"),
- a vacuum aspiration nozzle 106 that aspirates wastewater of the sample from the diluent tank 110 after measurement,
- a sipper nozzle 107 that introduces a liquid filled in the diluent tank 110 into the flow passage of the ion selective electrode 101,
- a diluted solution supply nozzle 108 that supplies a diluted solution to the diluent tank 110,
- an internal standard solution supply nozzle 109 that supplies an internal standard solution (IS) to the diluent tank 110,
- a waste liquid tank 111 to which the sample and the internal standard solution remaining in the diluent tank 110 are disposed of,
- a vacuum pump 112 that aspirates the sample and the internal standard solution remaining in the diluent tank 110 and disposes thereof in the waste liquid tank 111,
- solenoid valves 121 to 127 that opens and closes respective flow passages,
- an internal standard solution syringe pump 131 that fills the flow passage with the internal standard solution (IS),
- a diluted solution syringe pump 132 that fills the flow passage with the diluted solution,
- a sipper syringe pump 133 that introduces the reference electrolytes into the flow passage of the reference electrode 104,
- an internal standard bottle 141 that contains the internal standard solution (IS),
- a diluent bottle 151 that contains the diluted solution, and
- a reference electrolyte bottle 161 that contains the reference electrolytes (reference solution).

The three types of ion selective electrodes 101 each acquire a potential based on the concentration of the corresponding electrolyte. The reference electrode 104 acquires a potential based on the reference solution. Various flow passages are configured in the analyzing apparatus 100. The flow passages supply the ion selective electrodes 101 and the reference electrode 104 with the sample or the reference solution.

The electromotive force waveform processing unit 2 includes,
- a potential measurement unit 20 that measures the potential difference (electromotive force) between the ion selective electrodes 101 and the reference electrode 104,
- a waveform acquisition unit 21 that constantly acquires the potential change of the electromotive force measured by the potential measurement unit 20 as a time history waveform and calculates a feature amount obtained from the acquired waveform,
- a waveform storage unit 22 that stores the waveform and the feature amount acquired by the waveform acquisition unit 21, and
- a waveform analyzing unit 23 that determines an abnormality using the waveform and the feature amount stored in the waveform storage unit 22 and stores parameters used for abnormality determination in the waveform storage unit 22.

The potential measurement unit 20 measures the electromotive force between the potential acquired by one of the ion selective electrodes 101 and the potential acquired by the reference electrode 104. The waveform acquisition unit 21 acquires a waveform representing the change in the electromotive force. The waveform analyzing unit 23 performs analysis using the change in the electromotive force and determines an abnormality based on the feature amount of the waveform. The waveform storage unit 22 stores the waveform and the feature amount.

The apparatus control unit 3 includes,
- a control unit 30 that performs overall control of the entire analyzing apparatus 100,
- a driving control unit 31 that is connected to the control unit 30 and controls signal input and output for operating various driving units mounted on the analyzing apparatus 100,
- an input unit 32 that is connected to the control unit 30 and is a device such as a mouse, keyboard, or a touch panel for a user of the analyzing apparatus 100 to input operation instructions and various parameters, and
- a display unit 33 that is connected to the control unit 30 and displays a state of the analyzing apparatus 100 including processing results of the waveform analyzing unit 23 using a GUI or the like.

The control unit 30 has a hardware structure, for example, as a known computer, and includes, for example, calculation means and storage means. The calculation means includes, for example, a processor. The storage means includes, for example, a storage medium such as a semiconductor memory device and a magnetic disk device. A part or all of the storage medium may be a non-transitory storage medium.

The storage means may store a program. The computer functions as the control unit 30 by the processor executing the program.

In the electrolyte analyzing unit 1,
- the pinch valve 105,
- the vacuum aspiration nozzle 106,
- the sipper nozzle 107,
- the vacuum pump 112,
- the solenoid valves 121 to 127,
- the internal standard solution syringe pump 131,
- the diluted solution syringe pump 132, and
- the sipper syringe pump 133
each function as driving units. The plurality of driving units control the flow passage, aspirate the sample, discharge the sample, aspirate the reference solution, discharge the reference solution, and the like. The driving control unit 31 controls signal input and output for operating the driving units.

In particular, the driving control unit 31 outputs a control signal to one or a plurality of driving units in relation to each of a plurality of driving timings related to the components to be replaced. For example, all of the driving units may be the components to be replaced, only a part of the driving units may be the components to be replaced, or structures other than the driving units may be a part of the components to be replaced.

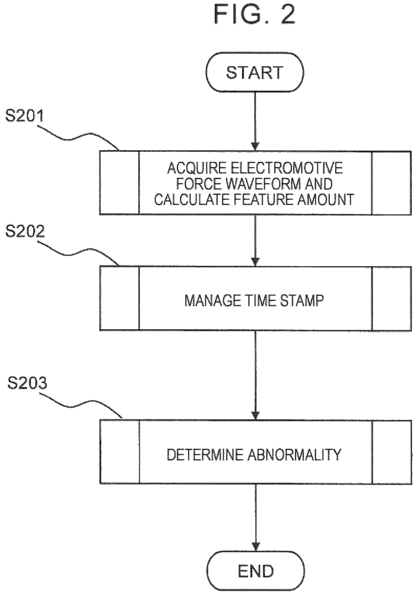

Fig. 2 is a flowchart showing a processing procedure of the waveform acquisition unit 21 and the waveform analyzing unit 23.

First, when the analyzing apparatus 100 executes an electrolyte analysis, the waveform acquisition unit 21 performs processing of constantly acquiring the potential change of the electromotive force measured by the potential measurement unit 20 as a time history waveform (hereinafter, electromotive force waveform) and calculating the feature amount obtained from the acquired waveform (S201).

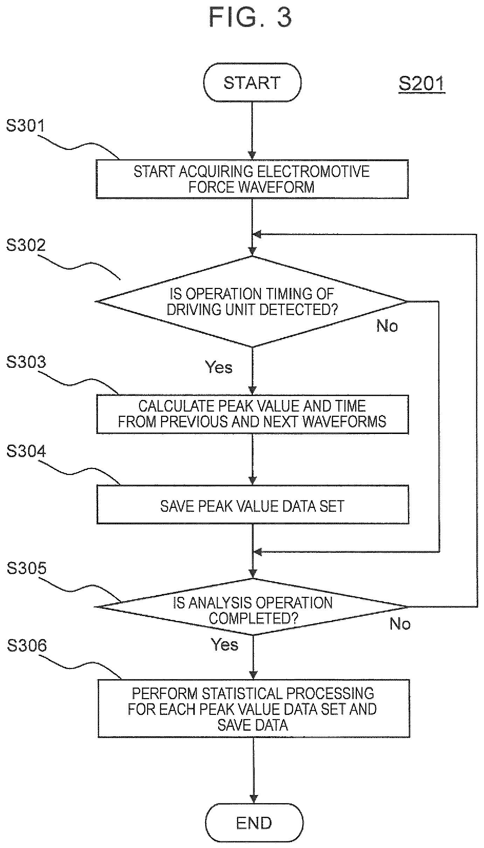

Here, details of the processing procedure of the processing S201 will be described with reference to Fig. 3.

Fig. 3 is a flowchart showing a procedure of the waveform acquisition unit 21 acquiring the electromotive force waveform and calculating the feature amount according to the first embodiment.

First, when the analyzing apparatus 100 executes electrolyte analysis, the waveform acquisition unit 21 starts processing of converting the electromotive force measured by the potential measurement unit 20 into a digital value and constantly acquiring the electromotive force as a time history waveform (S301).

Next, when the waveform acquisition unit 21 detects the operation timing of various driving units mounted on the electrolyte analyzing unit 1 in a state after executing the processing S301 (that is, during waveform acquisition) (Yes in S302), the waveform acquisition unit 21 calculates a peak value and a time when the peak value was reached (hereinafter, the peak time) as the feature amount from the electromotive force waveform before and after the time of the operation timing (S303).

The detection of the operation timing may be performed based on transmission of a timing signal (for example, a trigger signal or the like via communication) from the control unit 30 and based on driving timing information of various driving units set in advance in the waveform acquisition unit 21 based on the timing information.

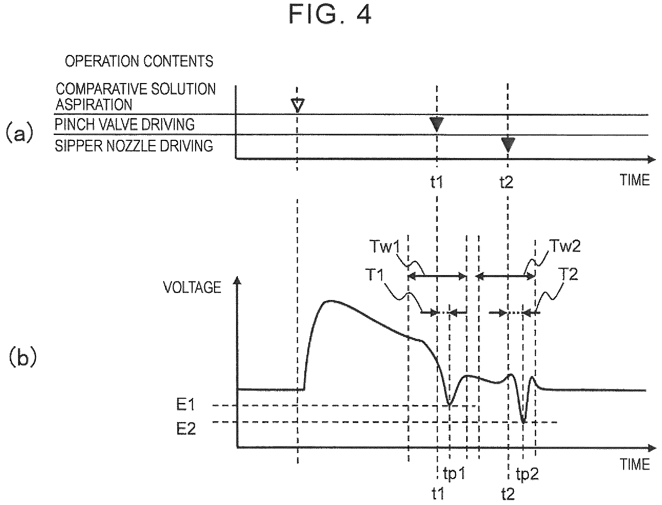

Here, details of a calculation method of the feature amount of the processing S303 will be described with reference to Fig. 4.

Fig. 4 is a graph illustrating a method of calculating the feature amount of the electromotive force waveform of the waveform acquisition unit 21 according to the first embodiment. The example of Fig. 4 is used when determining an abnormality in the sipper tube 102.

Fig. 4(a) shows the driving timing detected by the waveform acquisition unit 21. Fig. 4(b) shows an example of the peak value and the peak time calculated in synchronization with a time of the driving timing.

Fig. 4(a) describes comparative solution aspiration, pinch valve driving, and sipper nozzle driving as examples of the driving timings in operation sequences of the driving units mounted on the flow passage of the sipper tube 102 that is a replaceable component to be replaced periodically.

The driving timing in Fig. 4(a) is a part of the operation sequence when the reference electrolytes are supplied to the flow passage of the reference electrode 104.

The driving timing of "comparative solution aspiration" includes operations of opening the solenoid valves 121 and 122, closing the pinch valve 105, and driving the sipper syringe pump 133.

The driving timing of "pinch valve driving" includes opening the pinch valve 105, that is performed as a part of an operation when the sample in the diluent tank 110 is introduced into the flow passages of the ion selective electrodes 101.

The driving timing of "sipper nozzle driving" is also a part of the operation when the sample in the diluent tank 110 is introduced into the flow passages of the ion selective electrodes 101, and includes a lowering action of the sipper nozzle 107.

An abnormality in the sipper tube 102 is determined based on the waveforms related to the driving timings. Association between the driving timing and the replaceable component (for example, comparative solution aspiration, pinch valve driving, and sipper nozzle driving are referenced as the driving timings for determining an abnormality of the sipper tube 102 that is a replaceable component) is stored, for example, in the waveform analyzing unit 23.

In the present embodiment, the peak value and the peak time are calculated in synchronization with the driving timing of pinch valve driving (time t1) and the driving timing of sipper nozzle driving (time t2).

Fig. 4(b) shows an example of calculation of each of the peak value (E1) and the peak time (T1) of the electromotive force waveform synchronized with the time t1, and the peak value (E2) and the peak time (T2) of the electromotive force waveform synchronized with the time t2. Here, for example, "the peak time (T1) synchronized with the time t1" means that a value of the time T1 is expressed with the time t1 set as a reference. As a specific example, a value of a time elapsed from the time t1 to the time T1 (or a negative value of the time elapsed from the time T1 to the time t1) is equal to T1.

The waveform acquisition unit 21 searches for and calculates the peak of the electromotive force waveform in a peak detection time period (Tw1) that is a time width (for example, a time period including each of predetermined time periods before and after the time t1) with the preset time t1 set as a reference.

In the example of Fig. 4(b), a negative peak value at time tp1 is calculated. T1 = tp1 - t1. In the calculation of the peak, it can be determined in advance whether to search for a positive peak or a negative peak.

Similarly, the waveform acquisition unit 21 searches for and calculates the peak of the electromotive force waveform in a peak detection time period (Tw2) that is a time width (for example, a time period including each of predetermined time periods before and after the time t2) with the preset time t2 set as a reference.

In the example of Fig. 4(b), a negative peak at time tp2 is calculated. T2 = tp2 - t2.

The waveform acquisition unit 21 finally outputs the calculated feature amounts (E1, E2, T1, and T2) as a peak value data set.

As such, the waveform acquisition unit 21 associates the acquired waveforms with each of the driving timings, detects the waveform peaks that appear in the temporal vicinity of the driving timings, and calculates the feature amounts.

In the present embodiment, the feature amount includes,
- the electromotive force at the peak (peak value (E1) and peak value (E2) of the electromotive force waveform), and
- the time (T1 and T2) between the time of the driving timing (t1 and t2) and the time of occurrence of the peak (tp1 and tp2).

In a modification example, the feature amount may include only one of the above elements.

Here, returning to the processing S303 in Fig. 3, the description will be continued.

After the processing S303, the waveform acquisition unit 21 stores the peak value data set in the waveform storage unit 22 (S304), and the procedure proceeds to processing S305.

Note that, when the operation timings of the various driving units mounted on the electrolyte analyzing unit 1 are not detected in the processing S302 (No in S302), similarly, the procedure proceeds to the processing S305.

Next, the waveform acquisition unit 21 determines whether the analysis operation of the analyzing apparatus 100 is completed. When the operation is completed (Yes in S305), the procedure proceeds to processing S306. When the operation is not completed (No in S305), the procedure returns to the processing S302 and the processing operation continues.

Finally, the waveform acquisition unit 21 performs statistical processing (for example, calculation of an average value, a variance, a standard deviation, and the like for each of E1 and T1) on the peak value data sets having the same type of driving timing (for example, E1 and T1 corresponding to "pinch valve driving") among the plurality of acquired peak value data sets, and stores results in the waveform storage unit 22 (S306).

The waveform acquisition unit 21 may sequentially store the acquired electromotive force waveform and driving timings in the waveform storage unit 22.

The waveform acquisition unit 21 may store the plurality of the electromotive force waveform and the driving timings after performing statistical processing using the acquired electromotive force waveform and driving timings.

The above-mentioned peak value data sets and the electromotive force waveform and/or the driving timings are collectively referred to as electromotive force monitoring data.

In the present embodiment, an example in which the waveform storage unit 22 in the processing S304 and S306 are stored is described. However, results of the processing S304 and S306 may be transmitted to the waveform analyzing unit 23 without using the waveform storage unit 22, and abnormality may be determined by processing of the waveform analyzing unit 23 described below.

Here, returning to the processing S201 in Fig. 2, the description will be continued.

After the processing S201, the waveform acquisition unit 21 manages a time stamp that is a long-term time (unit of year, month, day, and hour) of the electromotive force waveform and the peak value data sets stored in the waveform storage unit 22.

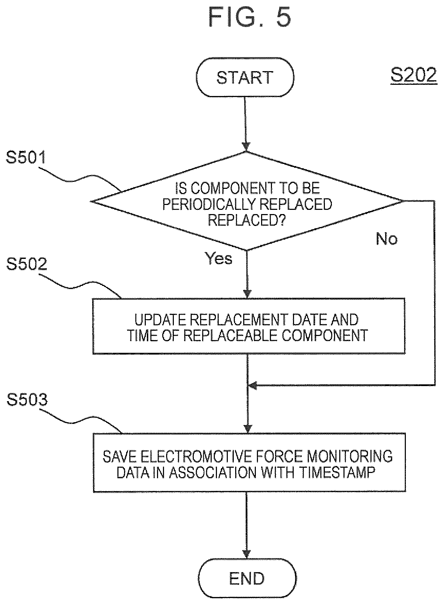

Here, details of the processing S202 will be described with reference to Fig. 5.

Fig. 5 is a flowchart showing a procedure for managing an acquisition time of the electromotive force waveform according to the first embodiment.

First, the waveform acquisition unit 21 determines whether replacement of a replaceable component (for example, the sipper tube 102) input via the input unit 32 is performed (S501). For example, data obtained when a user replaces the replaceable component is stored separately, and the waveform acquisition unit 21 determines whether replacement is performed by referring to the stored data. When the replacement is performed (Yes in S501), the replacement date and time of the target replaceable component is updated and stored in the waveform storage unit 22 (S502). When the replacement is not performed (No in S501), the procedure proceeds to processing S503.

Next, the waveform acquisition unit 21 stores a time stamp that is a set of information on the time of processing and information on the time elapsed from the replacement date and time of each replaceable component in association with the electromotive force monitoring data stored in the waveform storage unit 22 (S503).

Here, returning to the processing S202 in Fig. 2, the description will be continued.

After the processing S202 of the waveform acquisition unit 21, the waveform analyzing unit 23 determines an abnormality of the electrolyte analyzing unit 1 such as a defective replaceable component using the electromotive force monitoring data and the time stamp stored in the waveform storage unit 22 (S203).

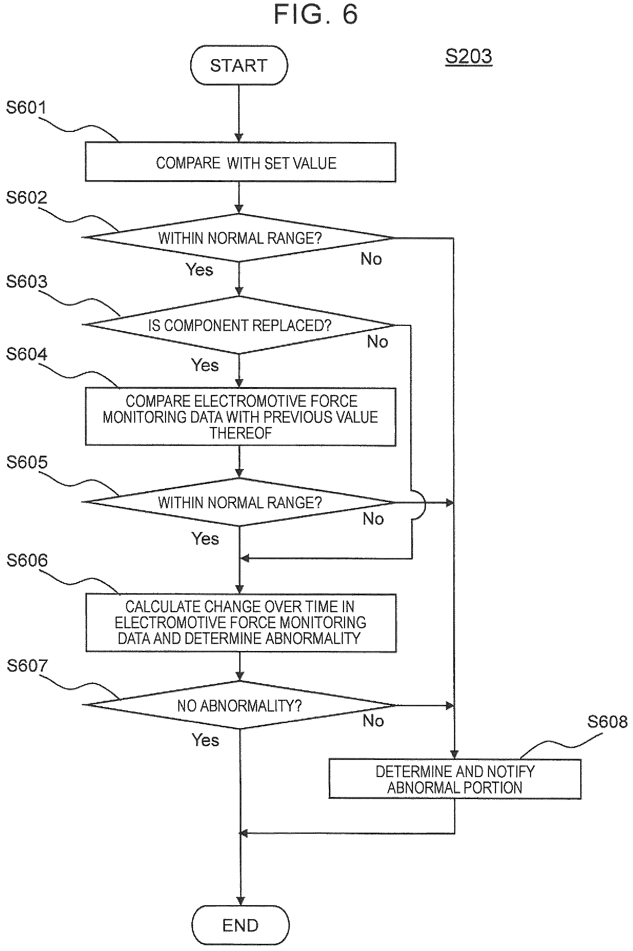

Here, details of the processing S203 will be described with reference to Fig. 6.

Fig. 6 is a flowchart showing a processing procedure for abnormality determination according to the first embodiment.

First, parameters such as a threshold value that are preset in the waveform analyzing unit 23 via the input unit 32 is compared with the peak value data sets that are stored in the waveform storage unit 22 (S601).

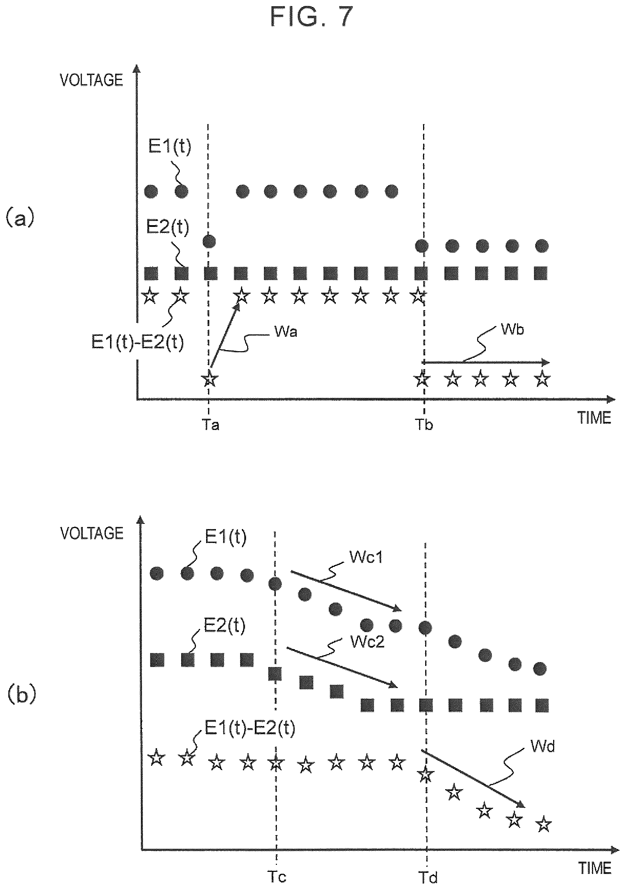

The comparison is made based on, for example, a relative amount of the two peak values (E1(t) - E2(t)) as described below with reference to Fig. 7. When the relative amount is within a predetermined normal range, it is determined that the comparison result is within the normal range. When the relative amount is out of the normal range, it is determined that the comparison result is out of the normal range. For example, a person skilled in the art is able to appropriately determine the normal range, for each type of driving timing.

In the processing S602, when the comparison result of the processing S601 is within the normal range (Yes in S602), the procedure proceeds to processing S603. When the result is not within the normal range (No in S602), the procedure proceeds to processing S608.

In the processing S603, it is determined whether the replaceable component is replaced since the processing of Fig. 6 was previously executed. For example, the determination is made by comparing the replacement date and time in S502 of Fig. 5 with the time stamp in S503 of Fig. 5. When the component is replaced (Yes in S603), the latest electromotive force monitoring data is compared with a previous value of the electromotive force monitoring data (that is, a value before replacement) (S604). When the component is not replaced (No in S603), the procedure proceeds to processing S606.

In the processing S604, the normal range is determined as a predetermined range based on the previous value of the electromotive force monitoring data, and for example, it is determined whether the amount of change from the previous value is equal to or less than a predetermined tolerance value or equal to or less than a predetermined tolerance ratio. As a specific example, the determination is made based on the amount of change in the relative amount of two peak values (E1(t) - E2(t)) as described below with reference to Fig. 7.

In processing S605, when the latest electromotive force monitoring data is within the normal range in the processing S604 (for example, when the amount of change from the previous time is equal to or less than a predetermined tolerance value or equal to or less than a predetermined tolerance ratio) (Yes in S605), the procedure proceeds to the processing S606. When the data is not within the normal range (for example, when the amount of change from the previous time is greater than the predetermined tolerance value or greater than the predetermined tolerance ratio) (No in S605), the procedure proceeds to the processing S608.

In the processing S606, the amount of change and the tendency of change over time in the feature amount and the like are calculated from the history of the electromotive force monitoring data and the time stamp. Then, abnormality is determined based on the calculated amount of change and tendency of change.

Here, details of the processing S606 will be described with reference to Fig. 7.

Fig. 7 is a graph illustrating an abnormality determination method using a change over time in the electromotive force waveform calculated by the waveform analyzing unit 23 according to the first embodiment.

Fig. 7(a) shows an example of the change over time and the abnormality determination using the electromotive force monitoring data. Fig. 7(a) is a graph illustrating transition over time in two peak values (E1(t) and E2(t)) and transition over time in the relative amount of the two peak values (E1(t) - E2(t)).

Here, the changes in the relative amount of the peak values (E1(t) - E2(t)) at time Ta and time Tb can be seen.

A threshold value for determining the amount of change is set in advance in the waveform analyzing unit 23, and may be set via the input unit 32.

After the changes at the time Ta and the time Tb, each of change tendencies Wa and Wb in the relative amounts of the peak values (E1(t) - E2(t)) can be seen.

Here, in the change tendency Wa, change at the time Ta is temporary. As such, when the value of the relative amount (E1(t) - E2(t)) changes temporarily and then returns to the value before change (or within a predetermined range based on the value before change) within a predetermined time, it is determined that the change is measurement disturbance and the replaceable component is not determined as abnormal.

In contrast, in the change tendency Wb, the change at the time Tb continues for a certain period of time or longer. As such, when the value of the relative amount (E1(t) - E2(t)) does not return to the value before change (or within a predetermined range based on the value before change) even when a predetermined time elapsed after change, it is determined that the change is deterioration of the replaceable component, that is, the replaceable component is determined as abnormal.

The criteria for determining change tendencies are set in advance in the waveform analyzing unit 23, and may be set via the input unit 32.

Fig. 7(b) also shows an example of change over time using the electromotive force monitoring data and abnormality determination. Fig. 7(b) is a graph illustrating transition over time of two peak values (E1(t) and E2(t)) and transition over time of the relative amount of the two peak values (E1(t) - E2(t)).

Here, changes can be seen in the peak value E1(t) after time Tc and time Td and in the relative amount of the peak values (E1(t) - E2(t)) after the time Td.

A threshold value for determining the amount of change is set in advance in the waveform analyzing unit 23, and may be set via the input unit 32.

After the change at the time Tc, each of change tendencies Wc1 and Wc2 at the two peak values (E1(t) and E2(t)) can be seen.

In contrast, in the relative amount of the peak values (E1(t) - E2(t)), no change tendency after the time Tc can be seen. In other words, the relative amount (E1(t) - E2(t)) remains constant after the time Tc.

In the present example, no change tendency in the relative amount of the peak values (E1(t) - E2(t)) can be seen. As such, when the relative amount (E1(t) - E2(t)) does not change, it is assumed that the change is a change caused by the environment such as a temperature or a flow passage condition, and the replaceable component is not determined as abnormal.

In contrast, after the change at the time Td, the change tendency Wd (a decreasing tendency of electromotive force) in the relative amount of the peak values (E1(t) - E2(t)) can be seen.

In the present example, the change tendency Wd continues for a certain period of time or longer. As such, when the relative amount (E1(t) - E2(t)) continues to change for a certain period of time or longer, it is determined that the change is deterioration of the replaceable component, that is, the replaceable component is determined as abnormal.

A reference duration time for determining continuation of the change tendency Wd may be changed according to the time elapsed from the component replacement included in the time stamp.

The criteria for determining change tendencies are set in advance in the waveform analyzing unit 23, and may be set via the input unit 32.

The criteria for abnormality determination described above are merely examples, and are not limited thereto.

Here, returning to the processing S606 in Fig. 6, the description will be continued.

After the processing S606, when there is no abnormality in the determination result of the processing S606 (Yes in S607), the electrolyte analyzing unit 1 determines that there is no abnormality and ends the processing.

After the processing S606, when there is an abnormality in the determination result of the processing S606 (No in S607), the procedure proceeds to the processing S608.

The processing S608 is executed when abnormality is determined in at least one of the above-mentioned series of processing steps of the waveform analyzing unit 23, and an abnormal portion and a degree of abnormality are determined and notified.

Determination contents of the abnormal portion differ depending on a processing step in which the waveform analyzing unit 23 determines an abnormality.

When the abnormality is determined in the processing S602 (No in S602), the determination is made only based on the feature amount at a specific time point. Therefore, the degree of abnormality is determined as a first abnormality level that is higher than other abnormalities, and it can be determined that an immediate action is necessary.

When the abnormality is determined in the processing S605 (No in S605), the determination is made before and after the replacement of the component. Therefore, the degree of abnormality is a second abnormality level that is smaller than the first abnormality level, and the replaceable component (the component related to the corresponding driving timing) that is the abnormal portion is identified and output.

When the abnormality is determined in the processing S607 (No in S607), similarly, the determination is made based on the change over time from the replacement of the component. Therefore, the degree of abnormality is the second abnormality level that is smaller than the first abnormality level, and the replaceable component that is the abnormal portion is identified and output.

Finally, in the processing S608, the determination results are notified using the display unit 33.

In the processing S608, further comparison may be made with the electromotive force monitoring data of each of the ion selective electrodes 101 (chloride ion electrode 101a, potassium ion electrode 101b, and sodium ion electrode 101c).

For example, when the chloride ion electrode 101a is determined as abnormal and the potassium ion electrode 101b and the sodium ion electrode 101c are not determined as abnormal, the chloride ion electrode 101a may be set as a candidate for the determination result of the abnormal portion.

In the processing S608, comparison may be made with an abnormality during sample measurement.

For example, when an abnormal value is obtained in the measurement result during sample measurement, the degree of abnormality is large (for example, the first abnormality level) and it is determined that an immediate action is necessary.

A level of the notification method can be changed according to the degree of abnormality in the measurement result during sample measurement. For example, at a certain degree of abnormality, a warning message is output and the apparatus continues operation, but at a higher degree of abnormality, the apparatus stops operation. As another example, at a certain degree of abnormality, the apparatus is allowed to restart unconditionally after stopping the apparatus. However, at a higher degree of abnormality, the apparatus is prohibited from restarting until the replaceable component determined as abnormal is replaced.

Hereinabove, the entire processing is completed, and the procedure returns to the processing S203 in Fig. 2, where the processing of the waveform analyzing unit 23 ends.

As such, the analyzing apparatus 100 according to the first embodiment determines an abnormality. In particular, the abnormality is determined in relation to each of a plurality of driving timings related to the component to be replaced. Therefore, it is possible to appropriately detect a defect in the replaceable component.

A person skilled in the art is able to appropriately define the association between the driving timing and the component to be replaced according to the configuration of the analyzing apparatus, and the like. In particular, it is possible to detect an abnormality in components other than the driving units by associating a structure other than the driving units as a component to be replaced with any of the driving timings.

For example, although the sipper nozzle 107 is not a driving unit, it is possible to detect an abnormality in the sipper nozzle 107 by associating the sipper nozzle 107 with driving timings that may be affected by the abnormality in the sipper nozzle 107 (for example, at least one of the driving timing of "comparative solution aspiration", the driving timing of "pinch valve driving", and/or the driving timing of "sipper nozzle driving" in Fig. 4(a)).

As shown in Fig. 7, the waveform analyzing unit 23 determines an abnormality based on the change over time in the feature amount stored in the waveform storage unit 22. With such a configuration, it is possible to appropriately detect an abnormality that cannot be detected by a single measurement.

As shown in Fig. 6, the waveform analyzing unit 23 determines an abnormality after the component to be replaced is replaced. Here, the determination processing in Fig. 6 can be performed before measuring the concentration of electrolytes in the sample. Then, an abnormality is determined before the concentration of electrolytes is measured in the sample. Thereby, it is possible to prevent the measurement of the sample from being affected.

The waveform analyzing unit 23 determines an abnormality based on a plurality of feature amounts each related to different types of driving timings (in the example of Fig. 7, the feature amount E1 related to the driving timing of "pinch valve driving" and the feature amount E2 related to the driving timing of "sipper nozzle driving"). With such a configuration, it is possible to appropriately detect an abnormality that cannot be detected from a single type of driving.

As a modification of the first embodiment, when it is determined that there is an abnormality, the waveform analyzing unit 23 may be configured to identify the cause of the abnormality based on,
- a feature amount related to a waveform acquired when an operation of measuring the concentration of electrolytes in the sample is in progress, and
- a feature amount related to a waveform acquired when an operation of measuring the concentration of electrolytes in the sample is not in progress.

For example, in Fig. 7, the feature amount E1 may be set as the feature amount related to a waveform acquired when the operation of measuring the sample is in progress, and the feature amount E2 may be set as the feature amount related to a waveform acquired when the operation of measuring the sample is not in progress. The cause of the abnormality is identified and output in the processing S608 in Fig. 6. With such a configuration, it is possible to appropriately detect an abnormality even when the abnormality appears only during measurement of the sample.

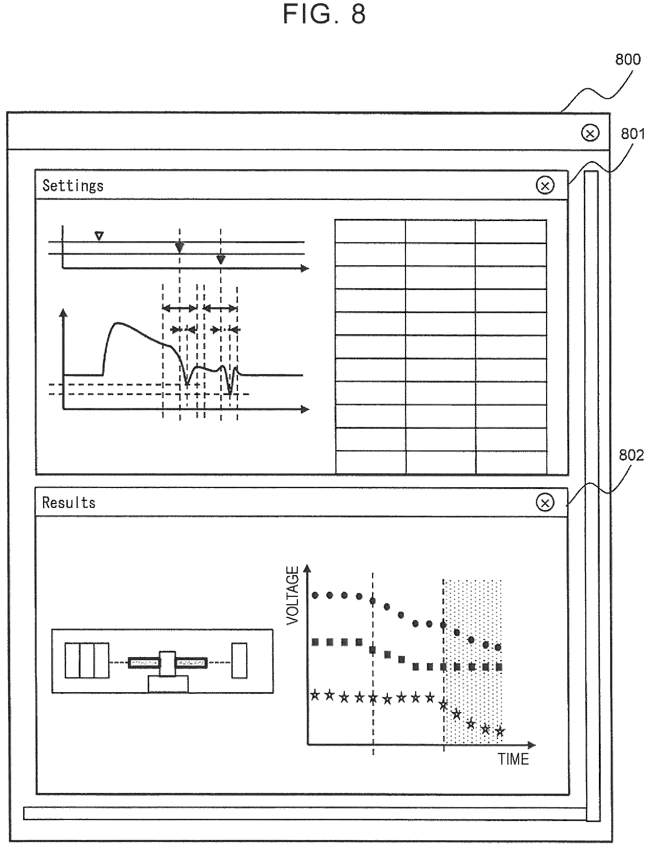

Fig. 8 is a diagram illustrating an example of a display screen 800 output on the display unit 33 according to the first embodiment.

The display screen 800 includes a setting input screen 801 and a result display screen 802.

The setting input screen 801 displays setting contents of the calculation processing and the abnormality determination processing of the waveform acquisition unit 21 and the waveform analyzing unit 23 that are set using the input unit 32.

The result display screen 802 displays the electromotive force waveform stored in the waveform storage unit 22 and a graph illustrating the change over time in the feature amount of the electromotive force waveform.

The result display screen 802 displays the determination result including the abnormal portion and the degree of abnormality determined by the waveform analyzing unit 23.

With the above configuration, in the present embodiment, it is possible to reduce the man power required for manually checking defects and deterioration of replaceable components such as the sipper tube 102 of the electrolyte analyzing unit 1.

It is possible to appropriately replace replaceable components and prevent measurement errors from occurring in the electrolyte analysis in advance.

### Reference Signs List

1: electrolyte analyzing unit
2: electromotive force waveform processing unit
3: apparatus control unit
20: potential measurement unit
21: waveform acquisition unit
22: waveform storage unit
23: waveform analyzing unit
30: control unit
31: driving control unit
32: input unit
33: display unit
100: analyzing apparatus
101: ion selective electrode
101a: chloride ion electrode
101b: potassium ion electrode
101c: sodium ion electrode
102: sipper tube
104: reference electrode
105: pinch valve (driving unit)
106: vacuum aspiration nozzle (driving unit)
107: sipper nozzle (driving unit)
108: diluted solution supply nozzle
109: internal standard solution supply nozzle
110: diluent tank
111: waste tank
112: vacuum pump (driving unit)
121 to 127: solenoid valve (driving unit)
131: syringe pump for internal standard solution (driving unit)
132: syringe pump for diluted solution (driving unit)
133: sipper syringe pump (driving unit)
141: internal standard solution bottle
151: diluted solution bottle
161: reference electrolyte bottle
800: display screen
801: setting input screen
802: result display screen
E1: peak value (feature amount)
E2: peak value (feature amount)
T1: time (feature amount)
T2: time (feature amount)

## Claims

1. An analyzing apparatus that measures a concentration of electrolytes in a sample, the analyzing apparatus comprising:
a plurality of ion selective electrodes that acquire a potential based on the concentration of electrolytes;
a reference electrode that acquires a potential based on a reference solution;
a flow passage through which the sample or the reference solution is supplied to the ion selective electrodes and the reference electrode;
a plurality of driving units that control the flow passage, aspirate the sample, discharge the sample, aspirate the reference solution, and discharge the reference solution;
a potential measurement unit that measures electromotive force between a potential acquired by the ion selective electrodes and a potential acquired by the reference electrode;
a waveform acquisition unit that acquires a waveform representing a change in the electromotive force;
a waveform analyzing unit that performs analysis using the change in the electromotive force; and
a driving control unit that outputs a control signal to one or a plurality of the driving units in relation to each of a plurality of driving timings related to a component to be replaced, wherein
the waveform acquisition unit associates the acquired waveform with each of the driving timings, detects a peak of a waveform that appears in temporal vicinity of the driving timing, and calculates a feature amount,
the feature amount includes at least one of
- the electromotive force at the peak, and
- a time period between a time of the driving timing and a time of occurrence of the peak, and
the waveform analyzing unit determines an abnormality based on the feature amount.

2. The analyzing apparatus according to claim 1, further comprising:
a waveform storage unit that stores the waveform and the feature amount, wherein
the waveform analyzing unit determines an abnormality based on a change over time in the feature amount stored in the waveform storage unit.

3. The analyzing apparatus according to claim 1, wherein the waveform analyzing unit determines the abnormality after the component to be replaced is replaced and before the concentration of electrolytes in the sample is measured.

4. The analyzing apparatus according to claim 1, wherein the waveform analyzing unit determines an abnormality based on a plurality of feature amounts each related to different types of the driving timings.

5. The analyzing apparatus according to claim 1, wherein
when it is determined that there is an abnormality, the waveform analyzing unit identifies a cause of the abnormality based on,
- a feature amount related to a waveform acquired when an operation of measuring the concentration of electrolytes in the sample is in progress, and
- a feature amount related to a waveform acquired when an operation of measuring the concentration of electrolytes in the sample is not in progress.

6. A method of determining an abnormality in an analyzing apparatus that measures a concentration of electrolytes in a sample, the analyzing apparatus including,
a plurality of ion selective electrodes that acquire a potential based on the concentration of electrolytes,
a reference electrode that acquires a potential based on a reference solution,
a flow passage through which the sample or the reference solution is supplied to the ion selective electrodes and the reference electrode,
a plurality of driving units that control the flow passage, aspirate the sample, discharge the sample, aspirate the reference solution, and discharge the reference solution,
a potential measurement unit that measures electromotive force between a potential acquired by the ion selective electrodes and a potential acquired by the reference electrode,
a waveform acquisition unit that acquires a waveform representing a change in the electromotive force,
a waveform analyzing unit that performs analysis using the change in the electromotive force, and
a driving control unit that outputs a control signal to one or a plurality of the driving units in relation to each of a plurality of driving timings related to a component to be replaced, wherein
the method includes,
a step of associating the acquired waveform with each of the driving timings, detecting a peak of a waveform that appears in temporal vicinity of the driving timing, and calculating a feature amount by the waveform acquisition unit,
the feature amount includes at least one of
- the electromotive force at the peak, and
- a time period between a time of the driving timing and a time of occurrence of the peak, and
the method includes a step of determining an abnormality based on the feature amount by the waveform analyzing unit.
